# EUROPEAN PATENT APPLICATION

(11) **EP 3 454 452 A1**
(43) Date of publication of application: **13.03.2019**
(21) Application number: 17190195.2
(22) Date of filing: 08.09.2017
(51) Int. Cl.: H02J 50/12, H02J 50/50

(54) **INDUCTIVE COUPLED POWER TRANSFER (ICPT) IN MULTIPLE GAP APPLICATIONS**

(71) Applicant: TE Connectivity Nederland B.V., 5222 AR's-Hertogenbosch (NL)
(72) Inventor: HABRAKEN, Gied, 5551-HX Valkenswaard (NL)
(74) Representative: Grünecker Patent- und Rechtsanwälte PartG mbB

(57) **Abstract**

The invention relates to a power transfer extension unit for inductively receiving power from a power transmission module and for supplying the power to a power receiving module. A first resonant circuit of the unit receives the power from the power transmission module in a first resonant state. A second resonant circuit of the unit transmits the power to the power receiving module in a second resonant state. An electric power cable directly connects the first and second resonant circuits electrically for transferring the power in the form of AC power. The first resonant state is established by a specific alignment of the first resonant circuit and a transmitting resonant circuit of the power transmission module within a mating distance. The second resonant state is established by the specific alignment of a second resonant circuit and a receiving resonant circuit of the power receiving module within the mating distance.

## Description

The invention relates to a power transfer extension unit for inductively transferring power from a power transmission module to a power receiving module.

Generally, power transfer extension units are widely utilized for transfer power in robotics, for example from a base to a robot arm or robot hand. Thereby, if the power is to be transferred contactless by inductive coupling, it is necessary to convert DC current to AC current on a primary side of an air gap and to convert the received AC current on the secondary side of the air gap back to DC current.

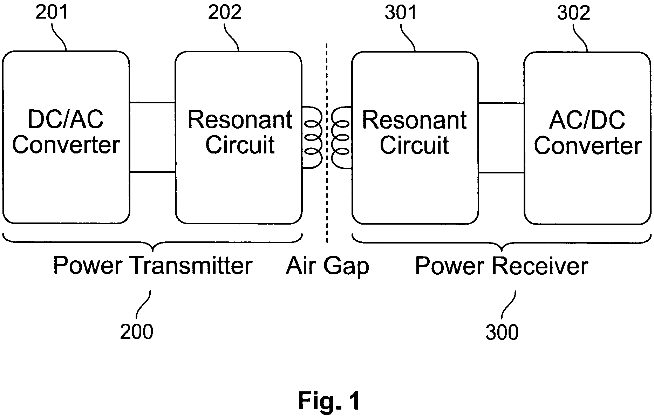

With reference to **figure 1****,** a conventional inductive power transfer via an air gap is shown. A power transmitter (power source) 200 comprises a DC/AC converter 201 that is connected to a resonant circuit 202. The resonant circuit 202 is on the primary side of the air gap and inductively transfers the converted AC power to a resonant circuit 301 of a power receiver (power sink) 300 on the secondary side of the air gap. An AC/DC converter 302 converts the received AC power back to DC current for further usage.

In multiple gap applications such as robotics, it is often required to relay power over multiple gaps. In such cases, for each air gap, a combination of power transmitter and power receiver as shown in figure 1 is required. However, if the power has to be inductively transmitted over a plurality of air gaps, in each combination of power transmitter and power receiver, the power needs to be converted to AC power before transmission and converted back to DC power after transmission. Thus, if power needs to be transferred via plural air gaps, the transmission efficiency of the power decreases with every additional intermediate power relay unit, due to the losses in the DC/AC and AC/DC converters.

Hence, there is a need for an improved power transfer relay unit which remedies the afore-mentioned disadvantages.

The object underlying the present invention is to propose an improved power transfer extension unit that reduces the amount of power conversions to a minimum.

A further object of the present invention is to reduce the manufacturing costs of a power transfer extension unit.

These objects are solved by the subject matter of the independent claims. Advantageous embodiments are subject to the dependent claims.

The present invention is based on the idea that a power transfer extension unit is implemented between a power transmitter as the power source and a power receiver as the power sink, wherein the specific power transfer extension unit according to the invention does not include an DC/AC converter and an AC/DC converter, but merely passive elements. The proposed power transfer extension unit merely comprises a resonant circuit on its input side for receiving the power as well as a resonant circuit on its output side for transferring the power.

According to the present invention, a power transfer extension unit for inductively receiving power from a power transmission module and for supplying the power to a first power receiving module comprises a first resonant circuit on an input side of the power transfer extension unit that is configured to receive the power from the power transmission module in a resonant state of both, the first resonant circuit and a transmitting resonant circuit of the power transmission module. A second resonant circuit on an output side of the power transfer extension unit is configured to transmit the received power to the first power receiving module in a resonant state of both the second resonant circuit and a receiving resonant circuit of the first power receiving module. An electric power cable directly connects the first and second resonant circuits electrically. The first resonant circuit is further configured to transfer the received power to the second resonant circuit via the electric power cable in form of AC power. The resonant state of the first resonant circuit and the power transmission module can be established by a specific alignment of the first resonant circuit and the transmitting resonant circuit of the power transmission module within a specific mating distance. The resonant state of the second resonant circuit and the first power receiving module can be established by the specific alignment of the second resonant circuit and the receiving resonant circuit of the first power receiving module within the specific mating distance.

Such arrangement advantageously allows using a power transfer extension unit for transferring the power from the power source to the power sink without the need for having implemented DC/AC and AC/DC converters. This advantageous effect is particularly achievable by the employment of two resonant circuits on both ends of the power transfer extension unit. According to the invention, power is transferred from the power source to the input resonant circuit of the power transfer extension unit, whereafter the receiving power is transferred on a electric power cable directly to the other resonant circuit on the output side of the power transfer extension unit without the need of converting the power at all. The resonant circuit on the output side then transfers the received power to the power sink in a resonant state of the respective coils. Hence, due to avoiding the need for intermediate DC/AC and AC/DC converter stages in the power transfer extension unit, the amount of power conversions is reduced to a minimum. More specifically, power conversion is only needed in the main power source as well as in the receiving power sink which is the load or entity for consuming the power. Thereby, the present invention thus advantageously requires only two converters, one DC/AC converter at the power source and one AC/DC converter at the power sink. This effect is particularly relevant for multiple gap applications, since the efficiency thus can be improved and the power loss within the several power transfer units is significantly reduced.

Since the present invention allows for a deletion/omission of intermediate DC/AC and AC/DC converter stages in power transfer extension units - compared to the conventional techniques - a further major advantage of the present invention lies in reducing the manufacturing costs of such power transfer extension units due to simplified circuits and the need of less electric elements. These advantages particularly come into effect, if plural air gaps have to be bridged at a time, such as in robot applications.

According to an advantageous embodiment of the present invention, the respective coils of the first and second resonant circuits as well as the respective coils of the transmitting resonant circuit and of the receiving resonant circuit are radially wound around a center axis of the respective coil.

This advantageously allows for a rotation of the power transfer extension unit around the center axis of the coils with respect to the power transmission module without degrading the inductive power transmission.

According to an advantageous embodiment of the present invention, the specific mating distance is defined as a distance, in the direction of the coils' center axis', between the coil of the transmitting resonant circuit and the coil of the first resonant circuit as well as between the coil of the second resonant circuit and the coil of the receiving resonant circuit to be within a predetermined range. The specific alignment is defined such that:
the radial displacement of the center axis of the coil of the first resonant circuit from the center axis of the coil of the transmitting resonant circuit as well as the radial displacement of the center axis of the coil of the second resonant circuit from the center axis of the coil of the receiving resonant circuit is within a predetermined radial displacement range; and
the angular displacement between the center axis of the coil of the first resonant circuit and the center axis of the coil of the transmitting resonant circuit as well as the angular displacement between the center axis of the coil of the second resonant circuit and the center axis of the coil of the receiving resonant circuit is within a predetermined angular displacement range.

According to an advantageous embodiment of the present invention, the power transfer extension unit is implemented as an extension cord, wherein the first and second resonant circuits denote respective first and second end sections of the extension cord.

According to an advantageous embodiment of the present invention, the power transfer extension unit further comprises at least one third resonant circuit on an output side of the power transfer extension unit, wherein the at least one third resonant circuit is arranged parallel to the first and second resonant circuits and configured to transmit the power received from the first resonant circuit to a second power receiving module in a resonant state of both the at least one third resonant circuit and the receiving resonant circuit of the second power receiving module; wherein the at least one third resonant circuit is connected to the electric power cable via at least one branch.

According to an advantageous embodiment of the present invention, the power transfer extension unit is implemented as a branched extension cord, wherein the first resonant circuit denotes a first end section of the extension cord, wherein the second resonant circuit denotes a second end section of the extension cord, and wherein the at least one third resonant circuit denotes a respective third end section of the extension cord.

According to an advantageous embodiment of the present invention, a branch of the electric power cable, which connects the first and second resonant circuits, is directly connected to a receiving resonant circuit of a second power receiving module for inductively transmitting the power received from the first resonant circuit to the second power receiving module.

Alternatively, a branch of the electric power cable, which connects the first and second resonant circuits, is directly connected to an AC/DC converter of a second power receiving module for transmitting the power received from the first resonant circuit to the second power receiving module.

According to an advantageous embodiment of the present invention, each of the first, second and third resonant circuits comprises a coil and a serially connected first capacitor, and further comprises a second capacitor arranged in parallel to the series circuit of coil and first capacitor. The coil of the first resonant circuit is configured to be inductively coupled to a coil of the transmitting resonant circuit of the power transmission module for receiving the power. The coil of the second resonant circuit is configured to be inductively coupled to a coil of the receiving resonant circuit of the first power receiving module for transmitting the power to the first power receiving module. The coil of the third resonant circuit is configured to be inductively coupled to a coil of the receiving resonant circuit of the second power receiving module for transmitting the power to the second power receiving module.

According to an advantageous embodiment of the present invention, the electric power cable directly connects both terminals of the second capacitor of the first resonant circuit with both terminals of the second capacitor of the second resonant circuit. Alternatively, the electric power cable directly connects both terminals of the second capacitor of the first resonant circuit with both terminals of the second capacitor of the second resonant circuit and with both terminals of the second capacitor of the at least one third resonant circuit via at least one branch.

According to an advantageous embodiment of the present invention, the respective terminals of the second capacitors are electrically connected by Litz wires.

According to an advantageous embodiment of the present invention, the power transmission module can be a power source with a DC/AC converter and the transmitting resonant circuit or can be another power transfer extension unit. The first power receiving module or the second power receiving module can be a power sink with the receiving resonant circuit together with an AC/DC converter or can be another power transfer extension unit.

This advantageously allows to use the power transfer extension unit according to the present invention for either a 1-gap application or a multi-gap application, where several power transfer extension units are arranged in a chain. In all cases the power transfer extension unit does not need to be changed or adapted, irrespective as to whether the second resonant circuit is inductively coupled to a power sink or a further power transfer extension unit.

According to an advantageous embodiment of the present invention, the power transfer extension unit is fully symmetric where the first resonant circuit and the second resonant circuit are identical.

According to an advantageous embodiment of the present invention, the first, second and third resonant circuits are identical.

The present invention further relates to a kit of parts for inductively transferring power from a power transmission module to a power receiving module and comprises at least one power transfer extension unit, wherein each power transfer extension unit comprises a first resonant circuit configured to inductively receive the power from the power transmission module. The power transfer extension unit further comprises a second resonant circuit is configured to inductively transmit the received power to the power receiving module. The power transfer extension unit further comprises an electric power cable configured to directly connect the first and second resonant circuits electrically. Each of the first and second resonant circuits comprises a coil, a first capacitor and a second capacitor.

According to an advantageous embodiment of the present invention, the kit of parts further comprises at least one third resonant circuit configured to inductively transmit power received from the first resonant circuit to the power receiving module. The kit of parts further comprises a branch configured to directly connect the at least one third resonant circuit with the electric power cable electrically. Each of the at least one third resonant circuit comprises a coil, a first capacitor and a second capacitor.

The accompanying drawings are incorporated into the specification and form a part of the specification to illustrate several embodiments of the present invention. These drawings, together with a description, serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form - individually or in different combinations - solutions according to the present invention. The following described embodiments thus can be considered either alone or in an arbitrary combination thereof. Further features and advantages will be become apparent from the following more particular description of the various embodiments of the invention as illustrated in the accompanying drawings, in which like references refer to like elements, and wherein:
- **Fig. 1**: is a schematic illustration of a conventional inductive power transfer over an air gap;
- **Fig. 2**: is a schematic illustration of an inductive power transfer over two air gaps using a power transfer extension unit, according to an embodiment of the invention;
- **Fig. 3**: is a circuit diagram of a power transfer extension unit shown in figure 2, according to an embodiment of the invention;
- **Fig. 4**: is a schematic illustration of an inductive power transfer over three air gaps using two power transfer extension units, according to an embodiment of the invention;
- **Fig. 5**: is a circuit diagram of the schematic illustration of figure 4, according to an embodiment of the invention;
- **Fig. 6**: is a schematic illustration of an inductive power transfer using one power transfer extension unit as shown in figures 2 and 3 as well as a branched power transfer extension unit, according to an embodiment of the invention;
- **Fig. 7**: is a circuit diagram of an inductive power transfer using a branched power transfer extension unit as shown in Fig. 6, according to an embodiment of the invention;
- **Fig. 8**: is a circuit diagram of a branched power transfer extension unit shown in figure 6, according to an embodiment of the invention;
- **Fig. 9**: is a schematic illustration of an inductive power transfer using two branched power transfer extension units, according to an embodiment of the invention;
- **Fig. 10**: is a schematic illustration of an inductive power transfer using one power transfer extension unit as shown in figures 2 and 3 as well as a branched power transfer extension unit with a direct connection to the power receiver, according to an embodiment of the invention;
- **Fig. 11**: is a circuit diagram of an inductive power transfer using one power transfer extension unit as shown in figures 2 and 3 as well as a branched power transfer extension unit with a direct connection to the power receiver, as shown in Fig. 10, according to an embodiment of the invention;
- **Fig. 12**: is a schematic illustration of an inductive power transfer using one power transfer extension unit as shown in figures 2 and 3 as well as a double-branched power transfer extension unit, according to an embodiment of the invention; and
- **Fig. 13**: is a schematic illustration of an inductive power transfer using one power transfer extension unit as shown in figures 2 and 3 as well as a double-branched power transfer extension unit with a direct connection to the power receiver, as shown in Fig. 10, according to an embodiment of the invention.

The present invention will now be explained in more detail with reference to the figures. Similar parts, elements and/or structures in both embodiments may be denoted by the same reference signs in the following description.

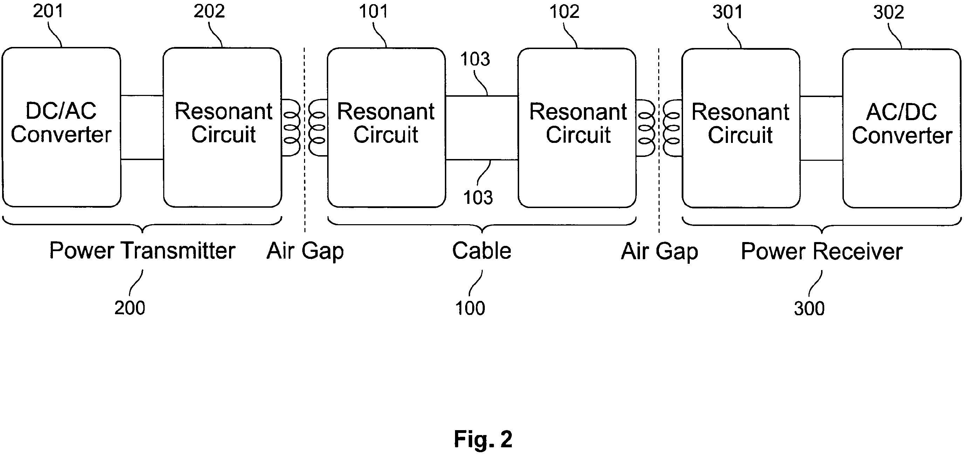

Referring to **figure 2****,** an inductive power transfer over two air gaps is schematically illustrated, wherein a power transfer extension unit is used according to an embodiment of the invention. Each of power transmitter 200 and power receiver 300 comprises a power converter and a resonant circuit, respectively, as already described in connection with figure 1.

However, as can be seen from the illustration of figure 2 according to the embodiment of the present invention, a cable 100 is inserted between the power transmitter 200 and the power receiver 300 for inductively transferring the power provided by the power transmitter 200 to the power receiver 300. Thereby, cable 100 relates to the power transfer extension unit 100 of the present invention. The power transfer extension unit 100 comprises a first resonant circuit 101 on its left-hand side, which can be seen as one end of cable 100, as well as a second resonant circuit 102 on the right-hand side of cable 100, which can be seen as the other end of the cable 100. An electric power cable 103 directly connects the first and second resonant circuits of the power transfer extension unit 100. As an exemplary implementation, the electric power cable 103 consists of two wires.

In the following, it is described how power is transferred from the power transmitter 200 to the power receiver 300. First, DC power is converted to AC power at the DC/AC converter 201 of power transmitter 200. The resonant circuit 202 of power transmitter 200 receives the AC power and inductively transfers the power to the first resonant circuit 101 of the power transfer extension unit 100. Thereby, the power transfer is carried out in a resonant state of the coil of both the resonant circuit 202 as well as the coil of resonant circuit 101.

Once the resonant circuit 101 of the power transfer extension unit 100 has inductively received the AC power, the AC power is transferred to the resonant circuit 102 of the power transfer extension unit 100 by means of the electric power cable 103. Due to the received AC power, resonant circuit 102 can then transfer the AC power to the resonant circuit 301 of power receiver 300 inductively. The inductive power transfer is carried out, if both the coil of resonant circuit 102 as well as the coil of resonant circuit 301 are in a resonant state.

Once the resonant circuit 301 of power receiver 300 has received the AC power, same is forwarded to AC/DC converter 302 by a direct connection whereafter the AC/DC converter 302 converts the received AC power back to DC power for being provided to a load or the like.

The combination of first and second resonant circuits as well as the cable 103 in-between can be considered as a "resonant cable" for extending the distance between the power transmitter and power receiver via air.

According to one implementation of the embodiment, the power transmitter 200 as well as the power receiver 300 may be an inductive power coupler pair or a contactless/wireless connector of the ARISO product portfolio. With these products, power can be transferred over an air gap without the need of physically contacting the transmitter and receiver. These products also allow rotation, even a continuous rotation as it occurs for instance during the movement of a robot arm, around the center axis of the coil windings. Also, these products allow varying gap distances as well as angle misalignments up to a certain maximum value. Generally, the maximum mating distance and angular displacement depends upon the coil dimensions and the coil sign. For instance, the mating distance between a coupler pair according to the ARISO standard may be within a range of 7 mm, and the radial displacement range may be within 5 mm, and the angular displacement range may be within 30 degrees.

Generally, the coils of the resonant circuits can be wound around an inner element along an axis, for instance the center axis as mentioned above or can also be provided in a through bore. In order to avoid power losses during the inductive power transfer from the power transmitter 200 to the power transfer extension unit 100 or from power transfer extension unit 100 to power receiver 300, it is required to keep a certain distance between the coils and nearby conductive materials such as metal.

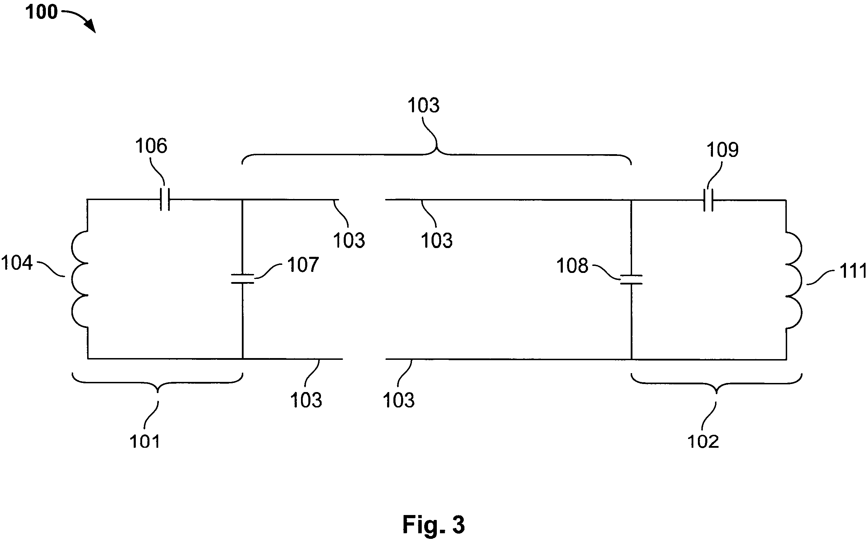

With reference to **figure 3****,** a circuit diagram of the power transfer extension unit 100 is shown according to an embodiment of the invention. As shown in the figure, the first resonant circuit 101, which may exemplarily be a parallel resonant circuit, comprises a coil 104 and a serially connected capacitor 106 as well as capacitor 107 arranged in a parallel to the series of coil 104 and capacitor 106. The first resonant circuit 101 is used for receiving power from the power transmitter 200 in a resonant state of first resonant circuit 101 with resonant circuit 202 of the power transmitter 200.

As further shown in figure 3, the second resonant circuit 102, which may exemplarily be a parallel resonant circuit, comprises a coil 111 and a serially connected capacitor 109 as well as a capacitor 108 arranged in a parallel to the series of coil 111 and capacitor 109.

The second resonant circuit 102 is used for transmitting power received from the first resonant circuit 101 via an electric power cable 103 to the power receiver 300 in a resonant state of the second resonant circuit 102 with resonant circuit 301 of the power receiver 300.

It is to be noted that although each of coils 104 and 111 has an internal resistance due to losses the coil, no such explicit/separate resistance is illustrated in the circuit diagram of figure 3. In particular, since the internal resistances of the coils, which are inseparable parts of the coils, are not relevant for resonance effects of the resonant circuits, it thus is omitted in the illustration of the circuit diagram.

In order to improve the efficiency of power transfer air over the air gap, it is required to adapt/match the first resonant circuit 101 to the resonant circuit 202 of the power transmitter 200 as well as to adapt/match the second resonant circuit 102 to the resonant circuit 301 of the power transmitter 300.

The power transfer extension unit 100 further comprises the electric power cable 103. In the exemplary embodiment, the electric power cable 103 consists of two wires, wherein one wire connects the connection point between capacitors 106 and 107 of the first resonant circuit 101 with the connection point of the capacitors 108 and 109 of the second resonant circuit 102.

Both wires of cable 103 directly connect the first and second resonant circuits electrically. Since the length of cable 103 as illustrated in figure 3 is not true to scale, the wires are drawn with broken lines in the figure. Generally, the length of cable 103 is mainly limited by the resistance and hardly by the capacitance/conductance. According to an exemplary implementation of the invention, the length of electric power cable 103 is set such that the inductance of the cable does not exceed 0,5 mH. According to one example, the maximum length of cable 103 is two meters. Due to the frequencies used in the resonant system, the wires of cable 103 are chosen based on the used frequency. According to an embodiment, the used frequency may be in the range between 100 kHz and 1 MHz, where preferably wires are employed which are commonly known as Litz wires, thereby reducing the skin effect and proximity effect losses. For example, each of such Litz wires consists of plural isolated thin copper wires. According to a further implementation of the embodiment, the wires of each of the Litz wires are twisted.

Further, since the cable capacitance and inductance values are usually much lower than the values used for the coils, capacitors and resistances of the resonant circuits, resonances in the cable 103 are negligible, except for very long cables 103 of, for instance, more than 10 meters.

As further derivable from figure 3, the combination of first and second resonant circuits as well as the electric power cable 103 is a fully passive "resonant cable" without any active components.

According to the embodiment of the invention, due to the use of the resonant technique for inductively transferring the power, there is no need that the coupling factor is close to 1. According to an exemplary implementation, it is sufficient to have a coupling factor of the resonant circuits to be between 0,3 and 0,7 for efficiently transferring the power. If using the power transmitter 200 and power receiver 300 from the ARISO product portfolio, the power transfer extension unit 100 then must also be compatible to the ARISO standard.

According to the embodiment, the power transfer extension unit 100 may be fully symmetric where both ends have the same coil and the same resonant circuit. In other words, resonant circuits 101 and 102 are identical, wherein capacitors and coils of the respective circuits are identical. Hence, the direction of connection of the power transfer extension unit 100 with respect to the power transmitter 200 and power receiver 300 is not important. However, the embodiment is not limited to a symmetric configuration of the power transfer extension unit 100.

According to a variation of the embodiment, the power transfer extension unit 100 may have different configurations of capacitors and coils. In such cases, the direction of connection of the power transfer extension unit 100 with respect to the power transmitter 200 and power receiver 300 may be relevant.

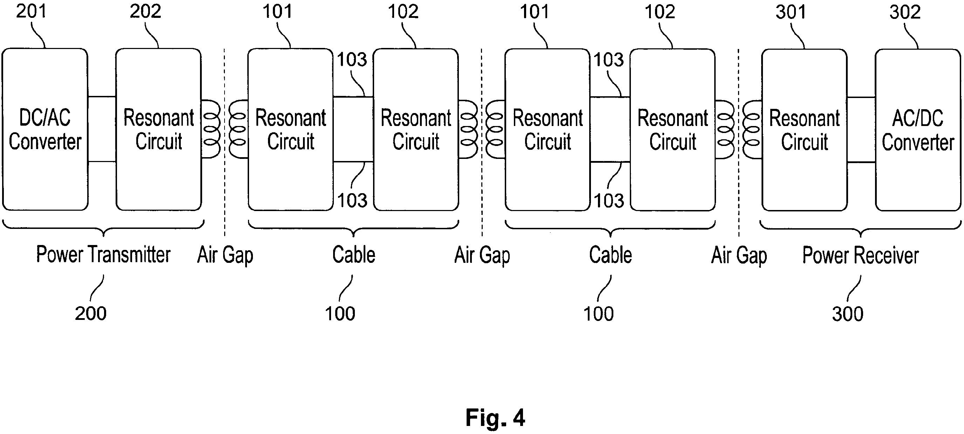

**Figure 4** is a schematic illustration of an inductive power transfer over three air gaps using two power transfer extension units 100 according to an embodiment of the invention.

Thereby, the number of power transfer extension units 100 is not limited to two. Such implementations, where multiple air gaps needs to be bridged for transfer of power, may for instance occur in robot applications with multiple joints. In this environment, power needs to be transferred over a plurality of air gaps, for instance, up to a robots hand or finger. This can only be done by "chaining" multiple power transfer extension units 100, such as for instance multiple extension units 100 according to the ARISO standard.

Hence, bridging multiple air gaps can be done by "chaining" several power transfer extension units 100. That is, as shown in figure 4, two cables 100 are inserted between the power transmitter 200 and power receiver 300. Thereby, each cable 100 corresponds to the power transfer extension unit 100 as illustrated in figures 2 and 3 as well as described above. Although figure 4 only shows two cables 100, according to an exemplary implementation of the embodiment, a "chain" of up to eight cables 100 may, for instance, be used for transferring the power inductively from the power transmitter 200 to power receiver 300.

As a further advantage of the present invention, no changes are necessary for any resonant circuit when adding or removing a further cable 100 between the power transmitter 200 and power receiver 300.

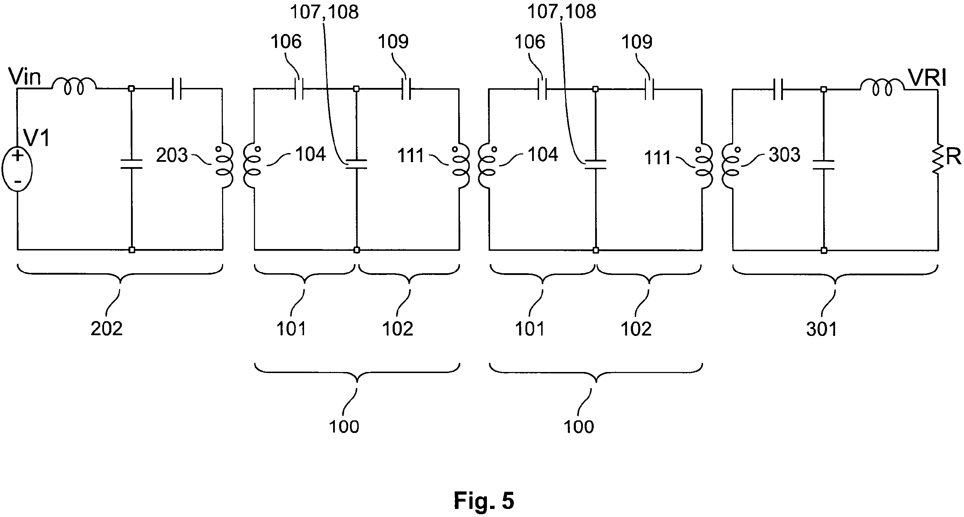

**Figure 5** is a circuit diagram of the schematic illustration of figure 4 according to an embodiment of the invention. As shown in figure 5, AC power is input to resonant circuit 202 of power transmitter 200. It is to be noted that a circuit diagram of DC/AC converter 201 is not illustrated in figure 5. Further, circuit diagrams of two power transfer extension units 100 are shown in line with the illustration of figure 4. Further, resonant circuit 301 of power receiver 300 is illustrated. It is to be noted that a circuit diagram of AC/DC converter 302 is not illustrated in figure 5.

With respect to the power transfer extension unit 100, figure 5 shows a circuit diagram comprising coils 104 and 111 as well as capacitors 106 and 109 as already illustrated in figure 3 and described in connection with figure 3. However, it is to be noted that figure 5 illustrates only one "center" capacitance 107/108 of power transfer extension unit 100. This "center" capacitance 107/108 is to be understood as an equivalent/cumulated capacitance for both capacitors 107 and 108 as shown in figure 3.

Overall, an advantageous effect of the present invention is that even, if multiplying the stages of power transfer extension unit 100 several times as shown in figure 5, the efficiency of transferring the power is close to the efficiency reached by the implementation according to figures 2 and 3, where only one power transfer extension unit 100 is used.

Hence, it is apparent that by implementing the power transfer extension unit 100 as an intermediate stage between a power transmitter and a power receiver, a significant cost reduction can be achieved since no intermediate DC/AC and AC/DC converters are required. Further, since there are only two converters (one DC/AC converter at the power transmitter 200 as well as one AC/DC converter at the power receiver 300), the overall efficiency is also significantly increased.

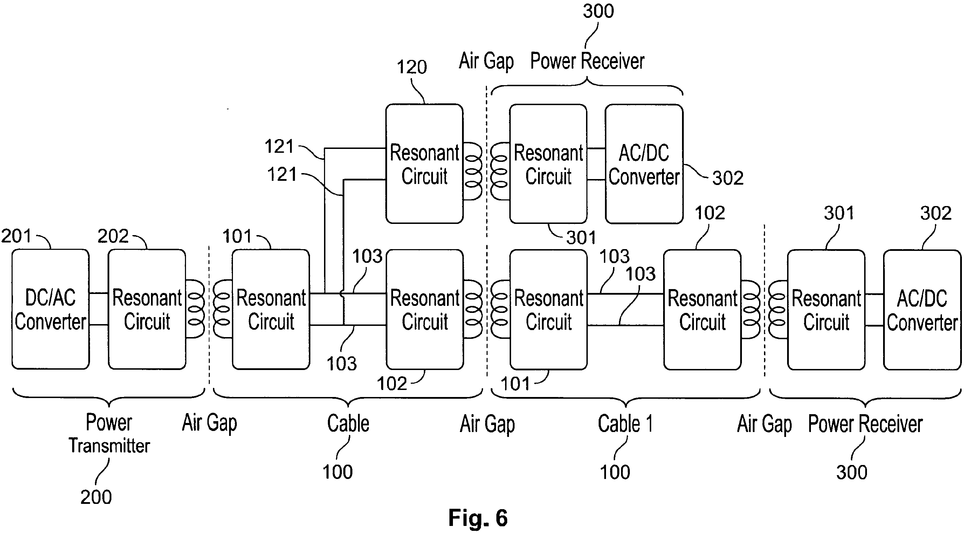

According to a further embodiment of the present invention, **Figure 6** is a schematic illustration of an inductive power transfer using one power transfer extension unit 100 as shown in figures 2 and 3 as well as a branched power transfer extension unit 100. "Cable 2" as shown in figure 6 comprises an electric power cable 103 between the first and second resonant circuits, wherein cable 103 branches off a branch 121 to a third resonant circuit 120.

As further shown in figure 6, the connection between the first and second resonant circuits 101 and 102 is branched-off by branch 121 so that the connection of the third resonant circuit 120 is arranged in parallel to the first and second resonant circuits 101 and 102. The third resonant circuit 120 inductively transfers power received from the first resonant circuit 101 to a further power receiver 300.

Hence, the power received from the power transmitter 200 is received from the first resonant circuit 101 of "cable 2" and then transferred to the second resonant circuit 102 as well as to the third resonant circuit 120 simultaneously. The second resonant circuit 102 of "cable 2" relays the power to "cable 1", whereafter "cable 1" provides the power inductively to the power receiver 300. Also, the third resonant circuit 120 provides the branched-off power to a further power receiver 300.

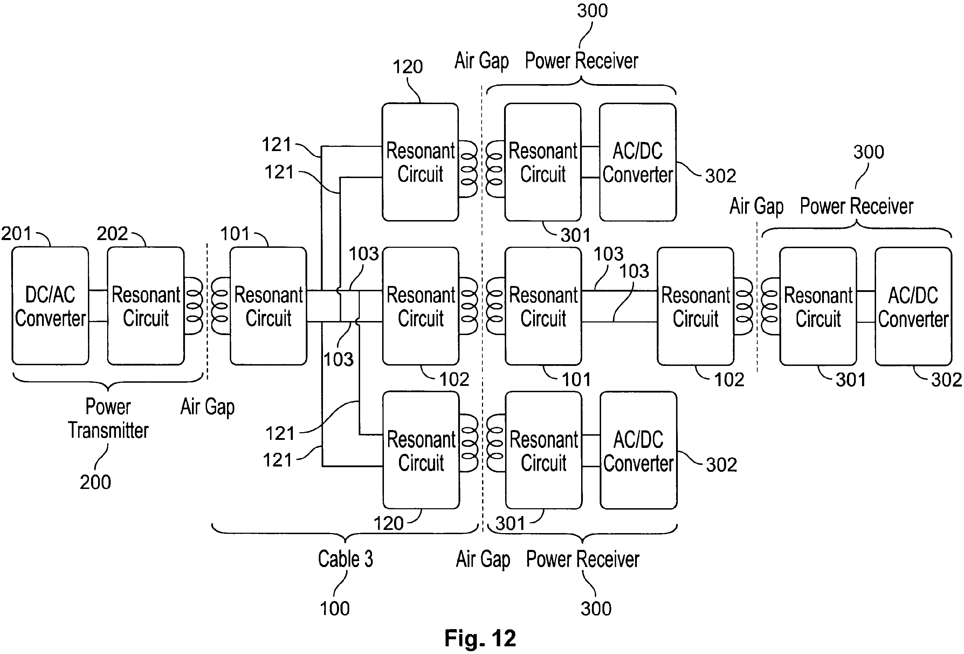

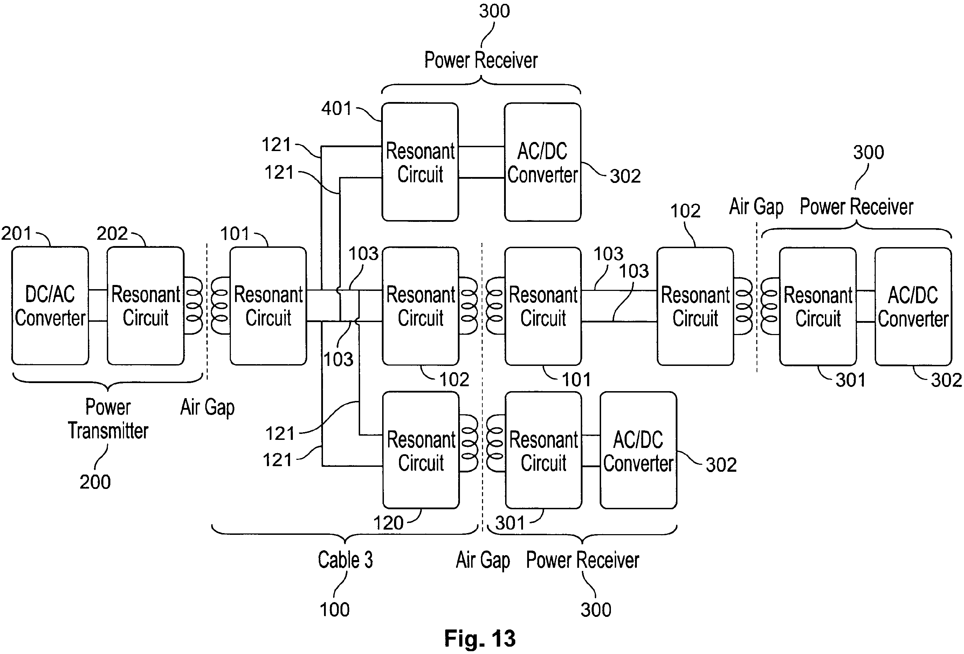

As an exemplary situation in the field of robot applications, such a power distribution may for instance be necessary if power needs to be transferred from a power transmitter 200 to several power receivers 300, thereby splitting the received power to plural power receivers. It is to be noted that the power may be provided to more than two power receivers 300 as shown in figure 6 (see figures 12 and 13). Branching off the power transfer extension units 100 is possible as long as the total power consumption is not exceeding a maximum power provided by the power transmitter 200 and as long as the current on cable 103 does not exceed a maximum allowed current value.

According to the invention, such branched cables 100 do not require specific adaptations of inductance in the resonant circuits so that the same coils and resonant circuits can be used for the third resonant circuit 120 as already discussed above in connection with the first and second resonant circuits 101 and 102.

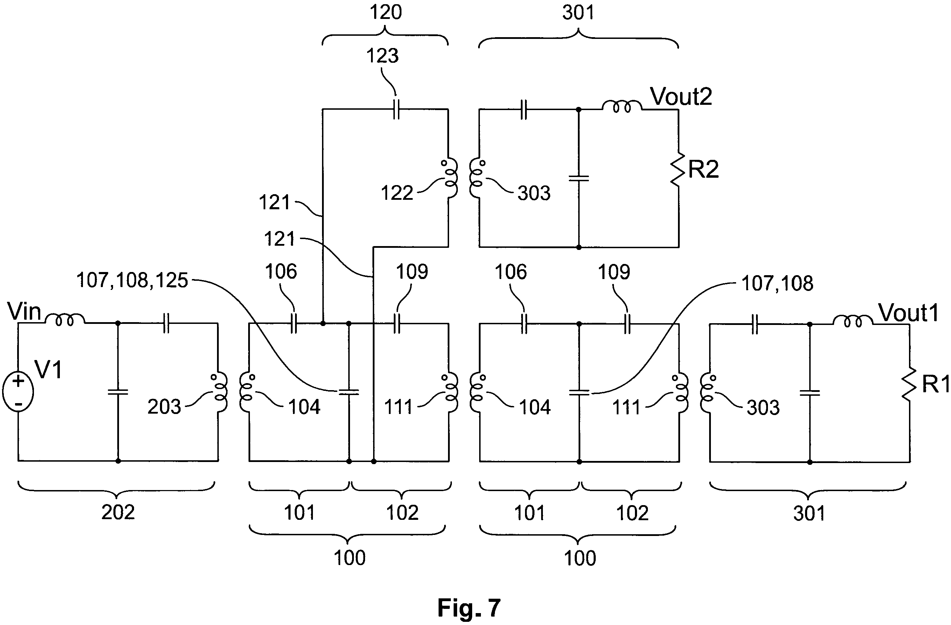

**Figure 7** is a circuit diagram of an inductive power transfer using a branched power transfer extension unit according to an embodiment of the invention. As shown in figure 7, AC power is input to resonant circuit 202 of power transmitter 200. It is to be noted that a circuit diagram of DC/AC converter 201 is not illustrated in figure 7. Further, a circuit diagram of one branched power transfer extension unit 100 is shown in line with the illustration of figure 6. Further, only resonant circuit unit 301 of power receiver 300 is illustrated. It is to be noted that a circuit diagram of AC/DC converter 302 is not illustrated in figure 7.

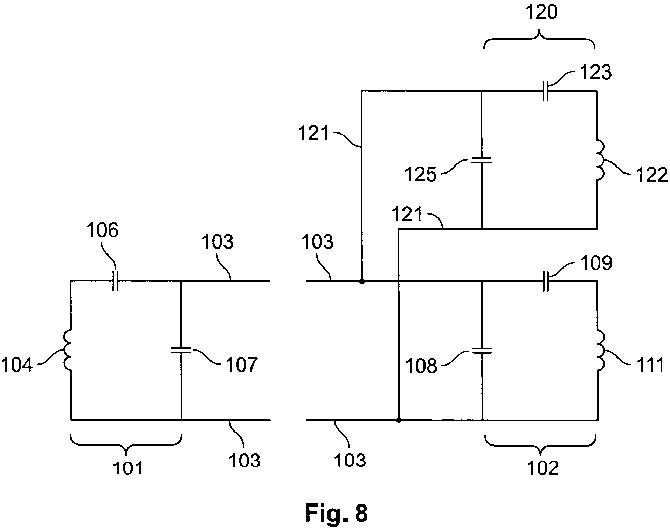

With respect to the branched power transfer extension unit 100, figure 7 shows a circuit diagram comprising coils 104 and 111 as well as capacitors 106 and 109 as already illustrated in figure 3 and described in connection with figure 3. However, it is to be noted that figure 7 illustrates only one "center" capacitance 107/108/125 of the branched power transfer extension unit 100. This "center" capacitance 107/108/125 is to be understood as an equivalent/cumulated capacitance for capacitor 107 of the first resonant circuit 101, capacitor 108 of the second resonant circuit 102 (as shown in figure 3) as well as capacitor 125 of the third resonant circuit 120, which is described in further detail in connection with figure 8.

As further shown in figure 7, the connection between the first and second resonant circuits 101 and 102 is branched-off from cable 103 by branch 121 so that the connection of the third resonant circuit 120 is arranged in parallel to the first and second resonant circuits 101 and 102. The third resonant circuit 120 comprises a capacitor 123 being serially connected to coil 122 of the third resonant circuit 120. Coil 122 provides the power inductively to the coil of the receiving resonant circuit 301 of the power receiver 300.

**Figure 8** shows a circuit diagram of a branched power transfer extension unit 100 according to an embodiment of the invention. Further to the elements already described in connection with figure 3, figure 8 shows a third resonant circuit 120 that is electrically connected to the electric power cable 103 by branch 121. The third resonant circuit 120, which may exemplarily be a parallel resonant circuit, comprises a coil 122 and a serially connected capacitor 123 as well as a capacitor 125 arranged in a parallel to the series of coil 122 and capacitor 123.

The third resonant circuit 120 is used for transmitting power received from the first resonant circuit 101 via the electric power cable 103 and branch 121 to a further power receiver 300 in a resonant state of the third resonant circuit 120 with resonant circuit 301 of the further power receiver 300.

Hence, as shown in figure 8, the third resonant circuit 120 is arranged in parallel to the second resonant circuit 102 so that the branched power transfer extension unit 100 is a Y-branched power transfer extension unit 100 that provides power received from the first resonant circuit 101 to both power receivers 300 inductively connected to the second and third resonant circuits 102 and 120.

According to the present invention, plural third resonant circuits 120 are possible that are attached in parallel to the second resonant circuit 102.

Figure 8 illustrates separate capacitors 107, 108 and 125 for each of the first, second and third resonant circuits 101, 102 and 120. It is to be noted that these three capacitors 107, 108 and 125 are referred to by the equivalent/cumulated "center" capacitance 107/108/125 of the branched power transfer extension unit 100 shown in figure 7.

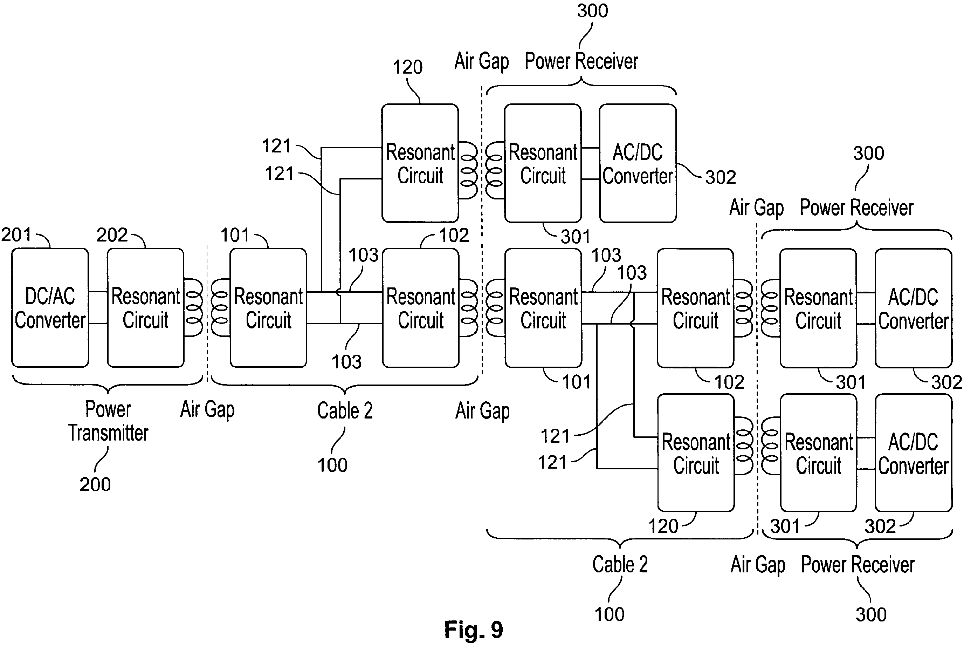

**Figure 9** is a schematic illustration of an inductive power transfer using two branched power transfer extension units 100 according to the further embodiment of the invention. Basically, two of the "cables 2" 100 are used as already as discussed above in connection with "cable 2" 100 of figure 6. According to this exemplary implementation of the further embodiment, the power received from power transmitter 200 may be distributed to three different power receivers 300.

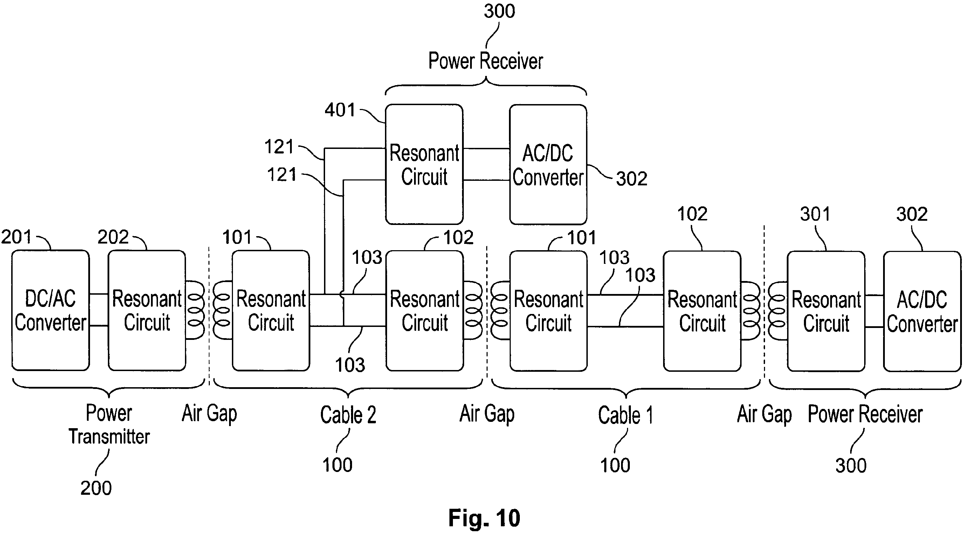

**Figure 10** relates to a further embodiment of the invention, where an inductive power transfer is provided by using one power transfer extension unit 100 as shown in figures 2 and 3 ("cable 1") as well as a branched power transfer extension unit ("cable 2") with a direct connection to the power receiver 300. More specifically, as shown in figure 10, instead of using the third resonant circuit 120 as shown in figure 6, figure 10 shows that branch 121 is directly electrically connected to receiving resonant circuit 401 of power receiver 300. "Cable 2" thus consists of first and second resonant circuits 101 and 102 as well as branch 121, which is a branch-off from cable 103, which directly connects to the resonant circuit 401 of the further power receiver 300.

Hence, according to this implementation, the power transfer from the first resonant circuit 101 to the resonant circuit 401 is carried out in a non-inductive manner, thereby omitting an extra set of coils, as shown in the branched section as shown in the upper part of figure 6. In other words, according to this implementation as shown in figure 10, resonant circuit 401 is part of the further power receiver 300.

According to an alternative implementation of this embodiment, resonant circuit 401 denotes a resonant circuit as a part of "cable 2", however, without a coil for inductively transmitting the power to the further power receiver 300.

The implementation as illustrated in figure 10 may especially be applicable in robot applications where, for instance, a sensor that needs to be powered is put at a joint of the arm.

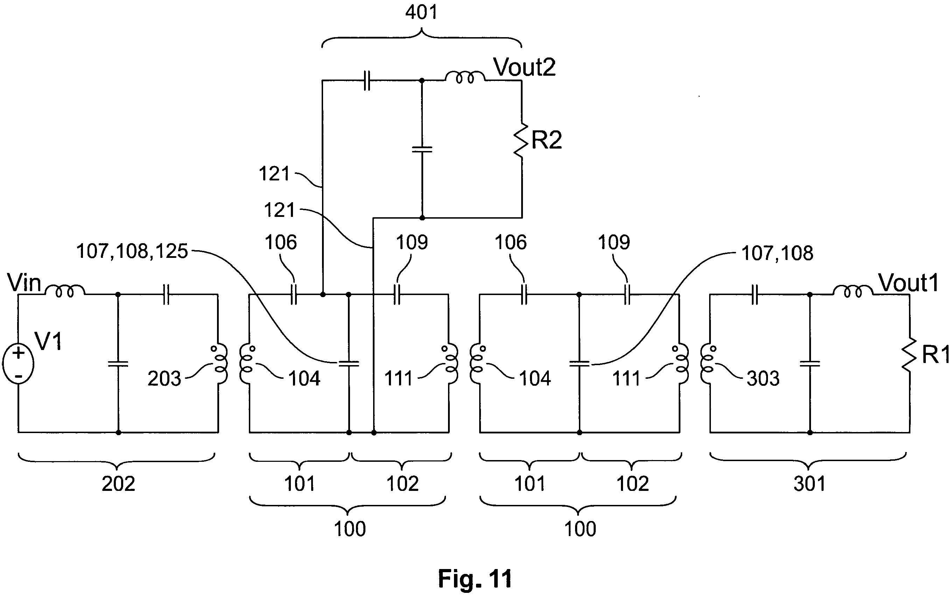

**Figure 11** relates to a circuit diagram of an inductive power transfer using one power transfer extension unit 100 as shown in figures 2 and 3 as well as a branched power transfer extension unit 100 with a direct connection to the power receiver 200, in line with the schematic illustration of figure 10.

More specifically, it can be seen that branched power extension unit 100 is connected to resonant circuit 401 by branch 121.

**Figure 12** is a schematic illustration of an inductive power transfer using one power transfer extension unit 100 as shown in figures 2 and 3 as well as a double-branched power transfer extension unit according to the further embodiment of the invention.

"Cable 3" as shown in figure 12 comprises an electric power cable 103 between the first and second resonant circuits, wherein cable 103 branches off two branches 121 to two third resonant circuits 120. The connection between the first and second resonant circuits 101 and 102 is branched-off by the branches 121 so that the connections of the two third resonant circuits 120 are arranged in parallel to the first and second resonant circuits 101 and 102. Each of the third resonant circuits 120 inductively transfers power received from the first resonant circuit 101 to a further power receiver 300.

Hence, the power received from the power transmitter 200 is received from the first resonant circuit 101 of "cable 3" and then transferred to the second resonant circuit 102 as well as to the two third resonant circuits 120 simultaneously. The second resonant circuit 102 of "cable 3" relays the power to the power transfer extension unit 100 ("cable 1" as shown in figure 6), whereafter such "cable 1" provides the power inductively to the power receiver 300. Also, the two third resonant circuits 120 provide the branched-off power to two further power receivers 300.

As an exemplary situation in the field of robot applications, such a power distribution may for instance be necessary if power needs to be transferred from a power transmitter 200 to several power receivers 300, thereby splitting the received power to plural power receivers. It is to be noted that the power may be provided to more than three power receivers 300 as shown in figure 12. Branching off the power transfer extension units 100 is possible as long as the total power consumption is not exceeding a maximum power provided by the power transmitter 200 and as long as the current on cable 103 does not exceed a maximum allowed current value.

According to the invention, such double-branched cables 100 do not require specific adaptations of inductance in the resonant circuits so that the same coils and resonant circuits can be used for the third resonant circuits 120 as already discussed above in connection with the first and second resonant circuits 101 and 102.

**Figure 13** relates to a further embodiment of the invention, where an inductive power transfer is provided by using one power transfer extension unit 100 as shown in figures 2 and 3 as well as a double-branched power transfer extension unit ("cable 3") with a direct connection to the power receiver 300.

More specifically, as shown in figure 13, instead of using the "upper" third resonant circuit 120 of the double-branched power transfer extension unit ("cable 3") as shown in figure 12, figure 13 shows that the "upper" branch 121 is directly electrically connected to receiving resonant circuit 401 of power receiver 300. "Cable 3" thus consists of first and second resonant circuits 101 and 102 as well as one branch 121 connecting to the third resonant circuit 120 that inductively provides power to resonant circuit 301 of power receiver 300 as well as a further branch 121 directly connected to resonant circuit 401 of power receiver 300.

Hence, according to this implementation, the power transfer from the first resonant circuit 101 to the resonant circuit 401 is carried out in a non-inductive manner, thereby omitting an extra set of coils, as shown in the "upper" branched section as shown figure 12. In other words, according to this implementation as shown in figure 13, resonant circuit 401 is part of the further power receiver 300.

According to an alternative implementation of this embodiment, resonant circuit 401 denotes a resonant circuit as a part of "cable 3", however, without a coil for inductively transmitting the power to the further power receiver 300.

The implementation as illustrated in figure 13 may especially be applicable in robot applications where, for instance, a sensor that needs to be powered is put at a joint of the arm.

**REFERENCE NUMERALS**

| **Reference Numerals** | **Description** |
|---|---|
| 100 | Power transfer extension unit |
| 101 | First resonant circuit |
| 102 | Second resonant circuit |
| 103 | Electric power cable |
| 104 | Coil of the first resonant circuit |
| 106 | First capacitor of the first resonant circuit |
| 107 | Second capacitor of the first resonant circuit |
| 108 | Second capacitor of the second resonant circuit |
| 109 | First capacitor of the second resonant circuit |
| 111 | Coil of the second resonant circuit |
| 120 | Third resonant circuit |
| 121 | Branch |
| 122 | Coil of the third resonant circuit |
| 123 | First capacitor of the third resonant circuit |
| 125 | Second capacitor of the third resonant circuit |
| 200 | Power transmission module |
| 201 | DC/AC converter |
| 202 | Transmitting resonant circuit |
| 203 | Coil of the transmitting resonant circuit |
| 300 | First power receiving module, second power receiving module |
| 301 | Receiving resonant circuit |
| 302 | AC/DC converter |
| 303 | Coil of the receiving resonant circuit |
| 401 | Receiving resonant circuit of a second power receiving module |
| | |
| | |
| | |
| | |
| | |
| | |
| | |
| | |
| | |
| | |
| | |
| | |

## Claims

1. A power transfer extension unit (100) for inductively receiving power from a power transmission module (200) and for supplying the power to a first power receiving module (300), the power transfer extension unit (100) comprising:
a first resonant circuit (101) on an input side of the power transfer extension unit (100) configured to receive the power from the power transmission module (200) in a resonant state of both, the first resonant circuit (101) and a transmitting resonant circuit (202) of the power transmission module (200);
a second resonant circuit (102) on an output side of the power transfer extension unit (100) configured to transmit the received power to the first power receiving module (300) in a resonant state of both the second resonant circuit (102) and a receiving resonant circuit (301) of the first power receiving module (300); and
an electric power cable (103) directly connecting the first and second resonant circuits (101, 102) electrically;
wherein the first resonant circuit (101) is further configured to transfer the received power to the second resonant circuit (102) via the electric power cable (103) in form of AC power;
and wherein the resonant state of the first resonant circuit (101) and the power transmission module (200) can be established by a specific alignment of the first resonant circuit (101) and the transmitting resonant circuit (202) of the power transmission module (200) within a specific mating distance;
and wherein the resonant state of the second resonant circuit (102) and the first power receiving module (300) can be established by the specific alignment of the second resonant circuit (102) and the receiving resonant circuit (301) of the first power receiving module (300) within the specific mating distance.

2. The power transfer extension unit (100) according to claim 1, wherein respective coils (104, 111) of the first and second resonant circuits (101, 102) as well as the respective coils (203, 303) of the transmitting resonant circuit (202) and of the receiving resonant circuit (301) are radially wound around a center axis of the respective coil.

3. The power transfer extension unit (100) according to claim 1 or 2, wherein the specific mating distance is defined as a distance, in the direction of the coils' center axis', between the coil (203) of the transmitting resonant circuit (202) and the coil (104) of the first resonant circuit (101) as well as between the coil (111) of the second resonant circuit (102) and the coil (303) of the receiving resonant circuit (301) to be within a predetermined range;
wherein the specific alignment is defined such that:
the radial displacement of the center axis of the coil (104) of the first resonant circuit (101) from the center axis of the coil (203) of the transmitting resonant circuit (202) as well as the radial displacement of the center axis of the coil (111) of the second resonant circuit (102) from the center axis of the coil (303) of the receiving resonant circuit (301) is within a predetermined radial displacement range; and
the angular displacement between the center axis of the coil (104) of the first resonant circuit (101) and the center axis of the coil (203) of the transmitting resonant circuit (202) as well as the angular displacement between the center axis of the coil (111) of the second resonant circuit (102) and the center axis of the coil (303) of the receiving resonant circuit (301) is within a predetermined angular displacement range.

4. The power transfer extension unit (100) according to one of the preceding claims, wherein the power transfer extension unit (100) is implemented as an extension cord, wherein the first and second resonant circuits (101, 102) denote respective first and second end sections of the extension cord.

5. The power transfer extension unit (100) according to one of the preceding claims, further comprising at least one third resonant circuit (120) on an output side of the power transfer extension unit (100), wherein the at least one third resonant circuit (120) is arranged parallel to the first and second resonant circuits (101, 102) and configured to transmit the power received from the first resonant circuit (101) to a second power receiving module (300) in a resonant state of both the at least one third resonant circuit (120) and the receiving resonant circuit (301) of the second power receiving module (300); wherein the at least one third resonant circuit (120) is connected to the electric power cable (103) via at least one branch (121).

6. The power transfer extension unit (100) according to claim 5, wherein the power transfer extension unit (100) is implemented as a branched extension cord, wherein the first resonant circuit (101) denotes a first end section of the extension cord, wherein the second resonant circuit (102) denotes a second end section of the extension cord, and wherein the at least one third resonant circuit (120) denotes a respective third end section of the extension cord.

7. The power transfer extension unit (100) according to one of claims 1 to 4, wherein a branch (121) of the electric power cable (103), which connects the first and second resonant circuits (101, 102), is directly connected to a receiving resonant circuit (401) of a second power receiving module (300) for inductively transmitting the power received from the first resonant circuit (101) to the second power receiving module (300); or
, wherein a branch (121) of the electric power cable (103), which connects the first and second resonant circuits (101, 102), is directly connected to an AC/DC converter (302) of a second power receiving module (300) for transmitting the power received from the first resonant circuit (101) to the second power receiving module (300).

8. The power transfer extension unit (100) according to one of the preceding claims, wherein each of the first, second and third resonant circuits (101, 102, 120) comprises a coil (104, 111, 122) and a serially connected first capacitor (106, 109, 123), and further comprises a second capacitor (107, 108, 125) arranged in parallel to the series circuit of coil (104, 111, 122) and first capacitor (106, 109, 123);
wherein the coil (104) of the first resonant circuit (101) is configured to be inductively coupled to a coil (203) of the transmitting resonant circuit (202) of the power transmission module (200) for receiving the power;
and wherein the coil (111) of the second resonant circuit (102) is configured to be inductively coupled to a coil (303) of the receiving resonant circuit (301) of the first power receiving module (300) for transmitting the power to the first power receiving module (300);
and wherein the coil (122) of the third resonant circuit (120) is configured to be inductively coupled to a coil (303) of the receiving resonant circuit (301) of the second power receiving module (300) for transmitting the power to the second power receiving module (300).

9. The power transfer extension unit (100) according to claim 8, wherein the electric power cable (103) directly connects both terminals of the second capacitor (107) of the first resonant circuit (101) with both terminals of the second capacitor (108) of the second resonant circuit (102); or
wherein the electric power cable (103) directly connects both terminals of the second capacitor (107) of the first resonant circuit (101) with both terminals of the second capacitor (108) of the second resonant circuit (102) and with both terminals of the second capacitor (125) of the at least one third resonant circuit (120) via at least one branch (121).

10. The power transfer extension unit (100) according to claim 9, wherein the respective terminals of the second capacitors (107, 108, 125) are electrically connected by Litz wires.

11. The power transfer extension unit (100) according to one of the preceding claims, wherein the power transmission module (200) can be a power source with a DC/AC converter (201) and the transmitting resonant circuit (202) or can be another power transfer extension unit (100);
and wherein the first power receiving module (300) or the second power receiving module (300) can be a power sink with the receiving resonant circuit (301) together with an AC/DC converter (302) or can be another power transfer extension unit (100).

12. The power transfer extension unit (100) according to one of the preceding claims, wherein the power transfer extension unit (100) is fully symmetric where the first resonant circuit (101) and the second resonant circuit (102) are identical.

13. The power transfer extension unit (100) according to one of the preceding claims, wherein the first, second and third resonant circuits (101, 102, 120) are identical.

14. A kit of parts for inductively transferring power from a power transmission module (200) to a power receiving module (300), comprising:
at least one power transfer extension unit (100), each comprising:
a first resonant circuit (101) configured to inductively receive the power from the power transmission module (200);
a second resonant circuit (102) configured to inductively transmit the received power to the power receiving module (300); and
an electric power cable (103) configured to directly connect the first and second resonant circuits (101, 102) electrically;
wherein each of the first and second resonant circuits (101, 102) comprises a coil (104, 111), a first capacitor (106, 109) and a second capacitor (107, 108).

15. The kit of parts according to claim 14, further comprising at least one third resonant circuit (120) configured to inductively transmit power received from the first resonant circuit (101) to the power receiving module (300);
wherein the kit of parts further comprises a branch (121) configured to directly connect the at least one third resonant circuit (120) with the electric power cable (103) electrically;
and wherein each of the at least one third resonant circuit (120) comprises a coil (122), a first capacitor (123) and a second capacitor (125).
